# EUROPÄISCHE PATENTSCHRIFT

(11) **EP 3 614 022 B1**
(45) Veröffentlichungstag und Bekanntmachung des Hinweises auf die Patenterteilung: **28.07.2021**
(21) Anmeldenummer: 19182285.7
(22) Anmeldetag: 25.06.2019
(51) Int. Cl.: F16H 57/04

(54) **HYBRIDGETRIEBE**
HYBRID TRANSMISSION
TRANSMISSION HYBRIDE

(30) Priorität: 20.08.2018 DE 102018213990
(43) Veröffentlichungstag der Anmeldung: 26.02.2020
(73) Patentinhaber: Magna PT B.V. & Co. KG, 74199 Untergruppenbach (DE)
(72) Erfinder: STRIEDELMEYER, Thomas, 70378 Stuttgart (DE)
(74) Vertreter: Zangger, Bernd

(56) Entgegenhaltungen:
- EP-A1- 2 479 053
- JP-B2- 4 346 764
- US-A1- 2012 091 836
- US-B2- 8 074 753

## Beschreibung

### Gebiet der Erfindung

Die vorliegende Erfindung betrifft ein Hybridgetriebe für ein Kraftfahrzeug, umfassend ein Differential und einen Elektromotor.

### Stand der Technik

Getriebe für Fahrzeuge weisen wie bekannt mechanische Komponenten auf, wie Wellen und Zahnräder, um bestimmte Funktionen, wie zum Beispiel ein Schaltgetriebe, insbesondere Doppelkupplungsschaltgetriebe, darstellen zu können. Die mechanischen Komponenten können dazu zum Beispiel schaltbare Zahnradpaare, Kupplungen und/oder ein Differential des Getriebes bilden. In jüngerer Zeit ist es bekannt, Funktionen eines Kraftfahrzeug-Getriebes durch die Verwendung der Antriebskraft von Elektromotoren zu erweitern oder zu verbessern, wodurch sogenannte "Hybridgetriebe" entstehen. Elektromotoren können dazu beispielsweise örtlich nahe an mechanischen Komponenten des Getriebes verbaut sein, insbesondere in einem gemeinsamen Getriebegehäuse.

Zur Schmierung und Kühlung der mechanischen Komponenten eines Getriebes ist es bekannt, im Inneren eines Getriebegehäuses einen Ölkreislauf auszubilden, wobei das Öl in einem üblicherweise in Einbaulage unten im Getriebegehäuse angeordneten Ölsumpf gesammelt wird und von dort zu den mechanischen Komponenten, beispielsweise zu verbauten Kupplungen des Getriebes, geleitet wird.

Elektromotoren können bekannterweise ebenfalls mit Öl gekühlt werden, wozu es bekannt ist, Öl aus dem Ölsumpf mittels einer Förderpumpe direkt zum Elektromotor zu fördern, da ein eventuell im Getriebegehäuses vorhandener Ölnebel üblicherweise nicht ausreicht um den Elektromotor zu kühlen. Als Förderpumpe wird beispielsweise die selbe Förderpumpe verwendet, die auch zum Kühlen einer Kupplung genutzt wird, wobei dann mittels eines Ventils zwischen Kupplungskühlung und Elektromotorkühlung umgeschaltet werden muss.

Eine derartige Förderpumpe zur Kühlung des Elektromotors benötigt nahezu permanent elektrische Energie. Dazu werden viele Bauteile, wie die Förderpumpe und das Ventil, benötigt, um eine ausreichende Kühlung des Elektromotors zu erreichen.

Aus der EP 2 479 053 A1 ist ein elektrisches Transaxle bekannt, bestehend aus: ein Transaxle-Gehäuse, das eine Getriebekammer darin definiert; einen Elektromotor mit einem Motorgehäuse, das an dem Transaxle-Gehäuse angebracht ist, wobei das Motorgehäuse darin eine Motorkammer definiert, und wobei eine Komponente des Elektromotors in der Motorkammer angeordnet ist; eine Achse, die von dem Transaxle-Gehäuse getragen wird; einen Getriebemechanismus, der in der Getriebekammer so angeordnet ist, dass er Leistung von dem Elektromotor auf die Achse überträgt; einen ersten Flüssigkeitssumpf, der in der Getriebekammer vorgesehen ist, wobei mindestens ein Teil des Getriebemechanismus in den ersten Flüssigkeitssumpf eingetaucht ist; einen zweiten Flüssigkeitssumpf, dem Flüssigkeit aus dem ersten Flüssigkeitssumpf, die durch Antreiben des Getriebemechanismus angehoben wird, zugeführt wird; und einen ersten Flüssigkeitseinleitungskanal, der zum Einleiten der aus dem ersten Flüssigkeitssumpf angehobenen Flüssigkeit in den zweiten Flüssigkeitssumpf verwendet wird, wenn die Achse in einer Vorwärtsbewegungsrichtung gedreht wird, umfassend einen zweiten Flüssigkeitseinleitungskanal, der zum Einleiten der aus dem ersten Flüssigkeitssumpf angehobenen Flüssigkeit in den zweiten Flüssigkeitssumpf verwendet wird, wenn die Achse in einer Rückwärtsbewegungsrichtung gedreht wird.

Die JP 4 346764 B2 offenbart einen Elektromotor und eine Schmierstruktur eines Rotorlagers zur Lagerung einer Rotorwelle eines Elektromotors, der in einer elektrischen Antriebseinheit verwendet wird, die eine elektrische Antriebseinheit enthält, die mit einem axialen Ende einer Rotorwelle des Elektromotors verbunden ist, wobei ein Ölzuführungskanal zur Führung von Schmieröl in dem Gehäuse der Kraftübertragungsvorrichtung in der Rotorwelle gebildet wird, wobei ein Paar Öldichtungen, die auf beiden Seiten in axialer Richtung des Rotorlagers angeordnet sind, in den Montagelöchern des Rotorlagers montiert sind, die in dem Stirnwandabschnitt am anderen Ende in axialer Richtung des Motorgehäuses ausgebildet sind, so dass sie jeweils axial von dem Rotorlager getrennt sind.

Das Dokument US 8 074 753 B2 zeigt eine Antriebsvorrichtung eines Fahrzeugs, bestehend aus: eine erste rotierende elektrische Maschine; einen Zirkulationsmechanismus zum Schmieren und Kühlen der ersten rotierenden elektrischen Maschine mit Schmieröl; eine Leistungssteuereinheit, die die erste rotierende elektrische Maschine steuert und durch Wärmeaustausch mit dem Schmieröl gekühlt wird; und ein Gehäuse, das die erste rotierende elektrische Maschine, den Zirkulationsmechanismus und die Leistungssteuereinheit aufnimmt und mit einem Zirkulationsweg des Schmieröls versehen ist, wobei das Fahrzeug einen Verbrennungsmotor enthält, der zusammen mit der ersten rotierenden elektrischen Maschine zum Drehen eines Rades verwendet wird, das Gehäuse in thermisch leitender Weise mit dem Verbrennungsmotor in Kontakt steht, eine Wärme des Schmieröls durch dieses Gehäuse auf ein Gehäuse des Verbrennungsmotors übertragen wird, das Gehäuse des Verbrennungsmotors mit einem Wasserdurchgang versehen ist, in dem Kühlwasser zirkuliert, und das Gehäuse einen Kühler-Vorsprung hat, der in den Wasserdurchgang hineinragt.

### Zusammenfassung der Erfindung

Es ist eine Aufgabe der Erfindung, ein Hybridgetriebe für ein Kraftfahrzeug in dieser Hinsicht zu verbessern und insbesondere ein Hybridgetriebe anzugeben, das eine ausreichende Kühlung eines Elektromotors ermöglicht, ohne elektrische Energie zu benötigen, wobei die Kühlung wenige Bauteile, insbesondere wenige bewegliche und verschleißbehaftete Bauteile, erfordern soll und somit kostengünstig durchführbar sein soll.

Die Lösung der Aufgabe erfolgt durch ein Hybridgetriebe für ein Kraftfahrzeug mit den Merkmalen gemäß Anspruch 1.

Das erfindungsgemäße Hybridgetriebe für ein Kraftfahrzeug, umfasst ein Getriebegehäuse, ein im Getriebegehäuse angeordnetes Differential und einen im Getriebegehäuse angeordneten Elektromotor, wobei im Getriebegehäuse Öl zur Schmierung und/oder zur Kühlung von Getriebekomponenten zirkuliert, wobei das Öl in einem Ölsumpf gesammelt wird, wobei ein Tellerrad des Differentials teilweise im Ölsumpf angeordnet ist, wobei eine Auffangvorrichtung so ausgebildet und im Getriebegehäuse angeordnet ist, das vom Tellerrad aus dem Ölsumpf mitgeschleudertes Öl in der Auffangvorrichtung gesammelt wird und so zum Elektromotor weitergeleitet wird, dass das Öl zum Elektromotor fließt, so dass der Elektromotor gekühlt wird.

Erfindungsgemäß wird Öl zur Kühlung eines Elektromotors ohne Nutzung einer Pumpe zu einem Elektromotor gefördert, und zwar zunächst mittels des Tellerrades eines Differentials aus einem Ölsumpf, der auch für andere Aufgaben genutzt werden kann. Das Öl wird durch das Tellerrad in eine Auffangvorrichtung mitgenommen bzw. geschleudert, so dass es sich in der Auffangvorrichtung sammelt und von der Auffangrichtung auch weiter zum Elektromotor geleitet werden kann. Durch die antreibende Kraft des Tellerrades und die Wirkung der Schwerkraft kann das Öl ohne eine Pumpleistung bzw. ohne zusätzliche Förderleistung aus der Auffangvorrichtung zum Elektromotor fließen, um diesen ausreichend zu kühlen.

Vorzugsweise umfasst der Elektromotor einen Hohlwellenrotor und die Auffangvorrichtung ist so ausgebildet und im Getriebegehäuse angeordnet, dass das Öl zu dem Hohlwellenrotor des Elektromotors geleitet wird. Durch den Hohlwellenrotor kann der Elektromotorläufer mit Öl gespeist werden.

Bevorzugt ist der Elektromotor achsparallel mit dem Differential, also insbesondere mit dem Tellerrad des Differentials, angeordnet.

Die Auffangvorrichtung weist erfindungsgemäß einen ersten Sammelbereich an einem, dem Tellerrad zugewandten, ersten Ende der Auffangvorrichtung auf, insbesondere zum ersten Sammeln des aufgefangenen Öls, und einen zweiten Sammelbereich, an dem, dem ersten Ende gegenüberliegenden und dem Elektromotor zugewandten, zweiten Ende der Auffangvorrichtung. Von diesem zweiten Sammelbereich aus kann das Öl zum Elektromotor gelangen, insbesondere fallen. Das Öl kann insbesondere aus dem zweiten Sammelbereich in den Hohlwellenrotor oder in einen Vorraum des Hohlwellenrotors fließen, insbesondere fallen.

Die Auffangvorrichtung ist bevorzugt so ausgebildet und im Getriebegehäuse angeordnet, dass in Einbaulage in einem Kraftfahrzeug der zweite Sammelbereich nicht höher liegt als der erste Sammelbereich, so dass sich im zweiten Sammelbereich im Normalbetrieb der selbe Ölpegelstand einstellen kann, wie im ersten Sammelbereich. Im zweiten Sammelbereich kann sich durch die selbe Wirkung der Schwerkraft auf das Öl bzw. das Prinzip der kommunizierenden Röhren der selbe Ölpegelstand einstellen. Beide Enden der Auffangvorrichtung können auf etwa der selben Höhe liegen und somit etwa den selben geodätischen Druck aufweisen.

Der zweite Sammelbereich kann vorzugsweise in Einbaulage tiefer angeordnet sein, als der erste Sammelbereich.

Die Auffangvorrichtung umfasst erfindungsgemäß einen Mittelteil, insbesondere zwischen erstem und zweiten Sammelbereich, der als Rohr oder als Schlauch ausgeführt sein kann. Der Mittelteil kann insbesondere wenige mm Durchmesser aufweisen.

Der Mittelteil kann im Wesentlichen als Rohrleitung ausgebildet sein, mit beispielsweise rundem, viereckigen oder dreieckigem Querschnitt.

Die Auffangvorrichtung weist erfindungsgemäß zumindest eine erste Öffnung zum Aufnehmen von Öl aus dem Bereich des Tellerrades auf und eine zweite Öffnung zum Aufnehmen von Öl aus dem Bereich einer Kupplung des Hybridgetriebes.

Vorzugsweise umfasst der Elektromotor ein Elektromotorgehäuse, wobei im Elektromotorgehäuse im Bereich von Wickelköpfen des Elektromotors Aussparungen ausgebildet sind, also Öffnungen, so dass das Öl durch diese Aussparungen bzw. Öffnungen an die Wickelköpfe des Elektromotors gelangen kann, um diese zu kühlen. Durch derartige Aussparungen kann insbesondere eine passive Kühlung des Elektromotors erhöht werden. Durch die Aussparungen kann insbesondere Spritzöl zu den Wickelköpfen des Elektromotors gelangen.

Das Elektromotorgehäuse ist bevorzugt zylindrisch ausgebildet und weist einen Zylindermantel auf. Die Aussparungen sind dann bevorzugt im Zylindermantel des Elektromotorgehäuses angeordnet. Insbesondere können die Aussparungen in axialen Endbereichen des Zylindermantels angeordnet sein.

Das Elektromotorgehäuse weist bevorzugt an seiner Außenseite geometrische Strukturen auf, die dazu ausgebildet sind, auf das Elektromotorgehäuse gelangendes Öl, insbesondere Spritzöl, in die Aussparungen zu leiten, insbesondere Rippen und/oder Nuten und/oder Ölleitbleche.

Das Getriebegehäuse kann ebenfalls geometrische Strukturen aufweisen, die dazu ausgebildet sind, auf das Getriebegehäuse gelangendes Öl, insbesondere Spritzöl, auf den Elektromotor, insbesondere in die Aussparungen, zu leiten, insbesondere Rippen und/oder Befestigungsstrukturen wie Flanschanbindungen des Getriebegehäuses.

### Kurzbeschreibung der Zeichnungen

Die Erfindung wird im Folgenden beispielhaft unter Bezugnahme auf die Zeichnungen beschrieben.
- Fig. 1: ist eine Teildarstellung eines erfindungsgemäßen Hybridgetriebes von der Seite, da das Merkmal mit Bezugszeichen 4 auf ein Tellerrad hinweist. Andernfalls wäre Fig.1 eine Darstellung eines nichterfindungsgemäßen Hybridgetriebes.
- Fig. 2 a, b: sind dreidimensionale Darstellungen des ersten Sammelbereiches einer Auffangvorrichtung eines erfindungsgemäßen Hybridgetriebes.

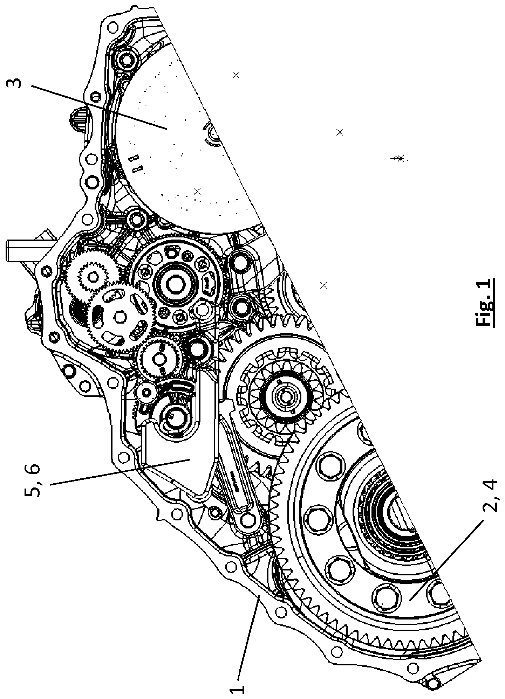

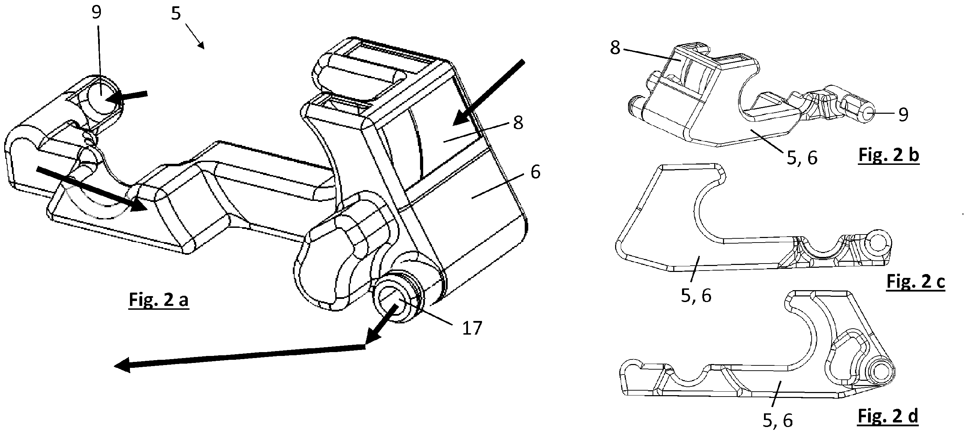

- Fig. 2 c, d: sind seitliche Darstellungen des ersten Sammelbereiches gemäß Fig. 2a und 1b.

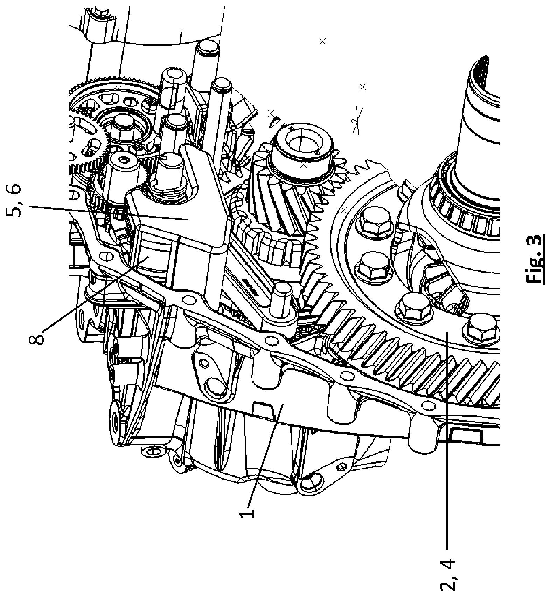

- Fig. 3: ist eine dreidimensionale Teildarstellung eines erfindungsgemäßen Hybridgetriebes, da das Merkmal mit Bezugszeichen 4 auf ein Tellerrad hinweist. Andernfalls wäre Fig. 3 eine Darstellung eines nichterfindungsgemäßen Hybridgetriebes.

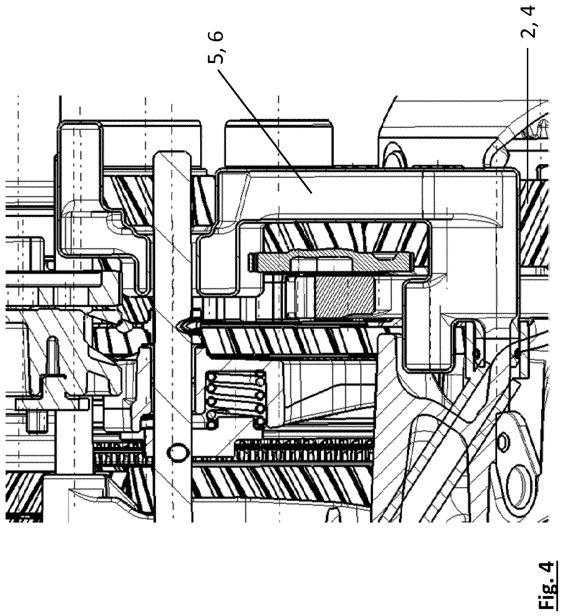

- Fig. 4: ist eine teilweise Schnittdarstellung eines erfindungsgemäßen Hybridgetriebes.

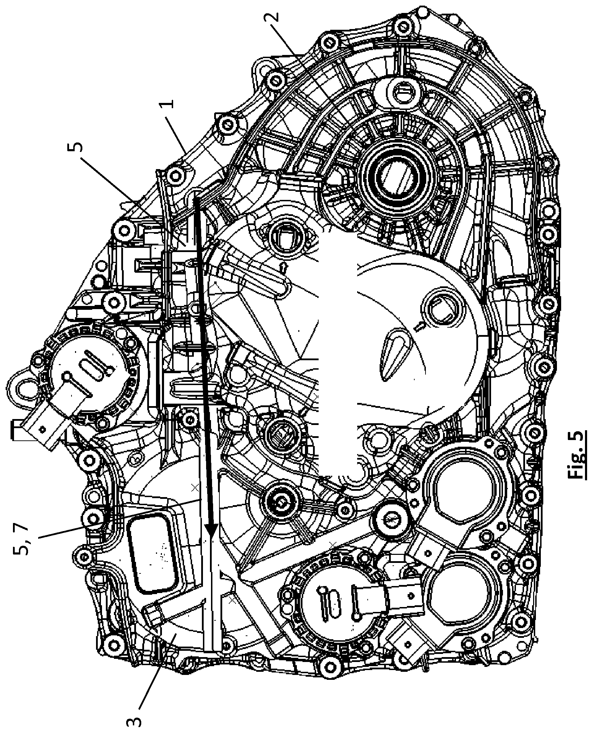

- Fig. 5: ist eine Darstellung eines erfindungsgemäßen Hybridgetriebes von der gegenüberliegenden Seite im Vergleich zur Fig. 2.

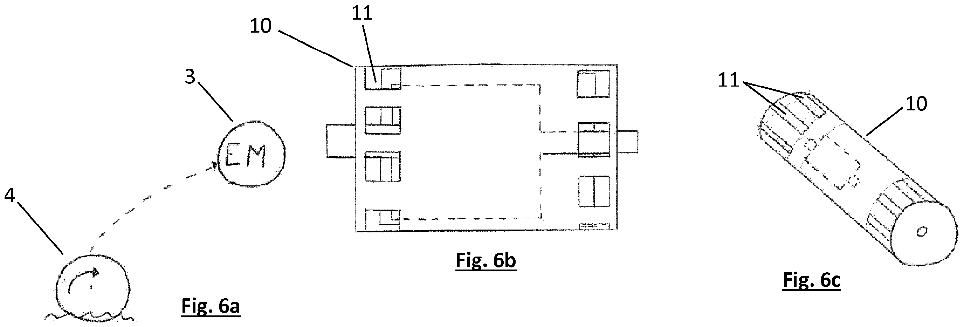

- Fig. 6 a, b, c: sind schematische Darstellungen des Elektromotors eines erfindungsgemäßen Hybridgetriebes.

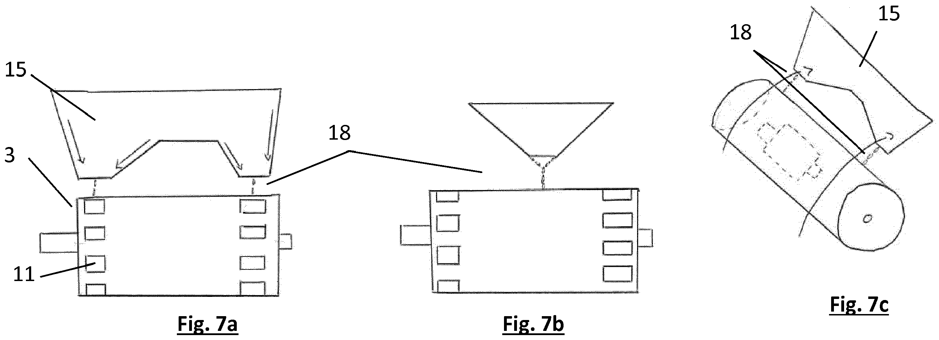

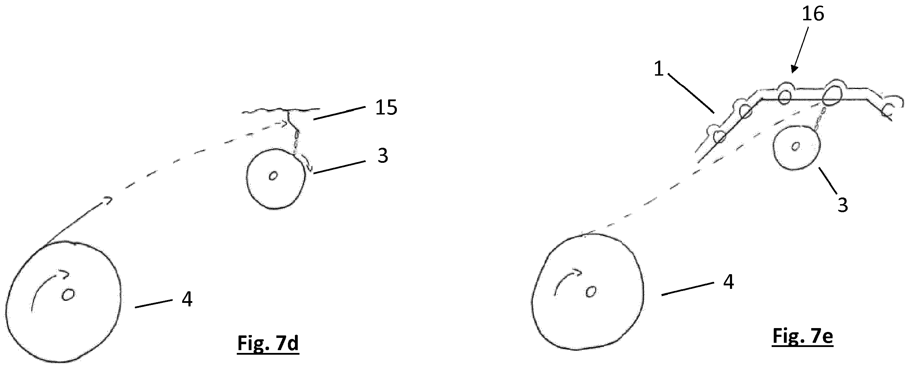

- Fig. 7 a bis e: sind schematische Darstellungen des Elektromotors eines erfindungsgemäßen Hybridgetriebes in einem Getriebegehäuse.

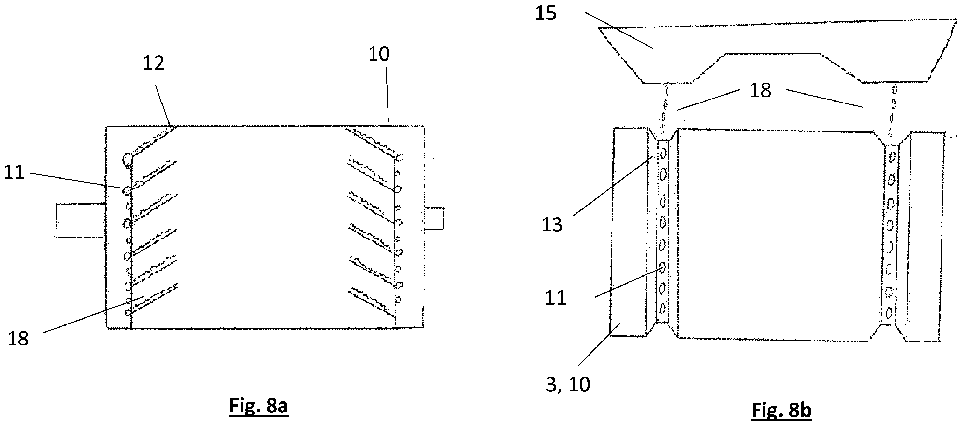

- Fig. 8 a, b: sind schematische Darstellungen des Elektromotors eines erfindungsgemäßen Hybridgetriebes in anderen Ausführungsformen.

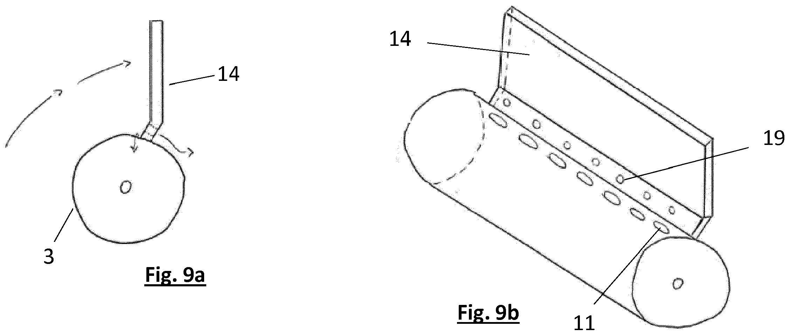

- Fig. 9 a, b: sind schematische Darstellungen des Elektromotors eines erfindungsgemäßen Hybridgetriebes in anderen Ausführungsformen.

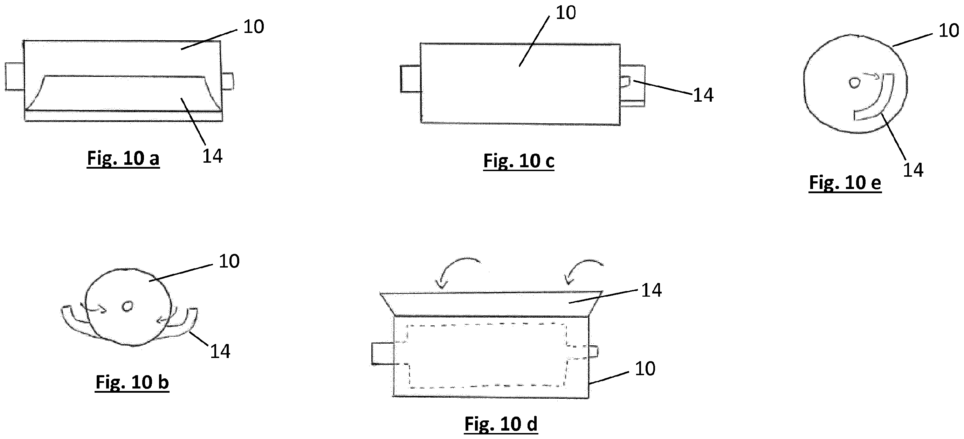

- Fig. 10 a bis e: sind schematische Darstellungen des Elektromotors eines erfindungsgemäßen Hybridgetriebes in anderen Ausführungsformen.

### Detaillierte Beschreibung der Erfindung

In Fig. 1 ist ein erfindungsgemäßes Hybridgetriebe für ein Kraftfahrzeug von der Seite dargestellt. Das Hybridgetriebe umfasst ein Getriebegehäuse 1, ein im Getriebegehäuse 1 angeordnetes Differential 2 mit einem Tellerrad 4 und einen im Getriebegehäuse 1 angeordneten Elektromotor 3. Der Elektromotor 3 und das Tellerrad 4 haben zueinander parallele Achsen.

Im Getriebegehäuse 1 wird Öl in einem nicht dargestellten Ölsumpf gesammelt. Das Tellerrad 4 des Differentials 2 ist teilweise im Ölsumpf angeordnet, so dass es Öl aus dem Ölsumpf mitnehmen und nach oben schleudern kann. Eine Auffangvorrichtung 5 ist im Getriebegehäuse 1 oberhalb und seitlich versetzt zum Tellerrad 4 angeordnet, so dass vom Tellerrad 4 aus dem Ölsumpf mitgeschleudertes Öl in der Auffangvorrichtung 5, genauer in einem ersten Sammelbereich 6 der Auffangvorrichtung 5, gesammelt wird und von der Auffangvorrichtung 5 zum Elektromotor 3 weitergeleitet wird, um den Elektromotor 3 zu kühlen.

Der Elektromotor 3 umfasst einen Hohlwellenrotor und die Auffangvorrichtung 5 leitet das Öl zu dem Hohlwellenrotor des Elektromotors 3 um durch den Hohlwellenrotor den Elektromotorläufer mit Öl zu speisen.

Die Auffangvorrichtung 5 weist einen ersten Sammelbereich 6 an einem dem Tellerrad 4 zugewandten ersten Ende der Auffangvorrichtung 5 auf, der in den Fig. 2 im Detail gezeigt ist. Ferner kann die Auffangvorrichtung 5 einen zweiten Sammelbereich aufweisen, an dem, dem ersten Ende gegenüberliegenden und dem Elektromotor 3 zugewandten zweiten Ende der Auffangvorrichtung 5. Aus dem zweiten Sammelbereich kann das Öl in den Hohlwellenrotor bzw. in einen Vorraum des Hohlwellenrotors fließen, insbesondere fallen.

Die Tiefe, genaue Ausführung und Schräglage der Auffangvorrichtung 5, insbesondere ihres ersten Sammelbereiches 6, dient dem optimalen Sammeln und Weiterleiten des Öls zum Elektromotor 3 und gleichzeitig der Vermeidung des Rücklaufens von Öl bei Schräglage, zum Beispiel bei starkem Bergabfahren.

Die Auffangvorrichtung 5 ist so ausgebildet und im Getriebegehäuse 1 angeordnet, dass in Einbaulage in einem Kraftfahrzeug der zweite Sammelbereich tiefer liegt als der erste Sammelbereich 6, so dass sich im zweiten Sammelbereich im Normalbetrieb der selbe Ölpegelstand einstellen kann, wie im ersten Sammelbereich 6.

Die Auffangvorrichtung 5 umfasst einen Mittelteil 7 zwischen erstem Sammelbereich 6 und zweitem Sammelbereich, der als Rohr, Schlauch oder Bohrung ausgeführt sein kann und der wenige mm Durchmesser aufweisen kann - siehe v.a. Fig. 5. Der Mittelteil 7 kann durch eine lange Bohrung durch das aufgedickte Getriebegehäuse 1 gebildet sein.

In Fig. 2a, b, c und d ist der erste Sammelbereich 6 einer Auffangvorrichtung 5 eines erfindungsgemäßen Hybridgetriebes näher dargestellt.

Die Auffangvorrichtung 5 weist an ihrem ersten Sammelbereich 6 eine erste Öffnung 8 zum Aufnehmen von Öl, insbesondere Spritzöl, aus dem Bereich des Tellerrades 4 auf und eine zweite Öffnung 9 zum Aufnehmen von Öl, insbesondere Spritzöl, aus dem Bereich einer Kupplung des Hybridgetriebes, beispielsweise zumindest einer Kupplung eines Doppelkupplungsgetriebes.

Der Auslass 17 des ersten Sammelbereichs 6 kann über ein innenliegendes Teil wie einen Schlauch oder ein Rohr oder über eine lange Bohrung durch das aufgedickte Getriebegehäuse 1 zum Elektromotor 3 angebunden sein.

Der mögliche Zufluss und Abfluss von Öl in den ersten Sammelbereich 6 ist in Fig. 2 a durch dicke Pfeile dargestellt.

Fig. 3 ist eine dreidimensionale Teildarstellung des selben erfindungsgemäßen Hybridgetriebes der Fig. 1 und Fig. 4 zeigt das Hybridgetriebe in einer teilweisen Schnittdarstellung von oben.

Fig. 5 zeigt das Hybridgetriebes der Fig. 1 von der gegenüberliegenden Seite aus gesehen. Der Mittelteil 7 der Auffangvorrichtung 5 verläuft leicht nach unten geneigt so zum Elektromotor 3, dass ein Auslass oberhalb des Hohlwellenrotors des Elektromotors 3 möglich ist.

Die Figuren 6 bis 10 zeigen Ausbildungen des Elektromotorgehäuses 10 sowie des Getriebegehäuses 1, die dazu dienen, die passive Kühlung des Elektromotors 3 zu verbessern. Die Bewegungsrichtung des Öls, insbesondere Spritzöls, ist dabei teilweise durch Pfeile eingezeichnet.

Da die thermischen Hot-Spots, nämlich die Wicklungsköpfe des Elektromotors 3 gekühlt werden sollen, hat das Elektromotorgehäuse 10, wie in Fig. 6b und c dargestellt, radial Aussparungen auf Höhe der Wicklungsköpfe, durch die das vom Differential 2 und von sonstigen Wellen abgespritzte Kühlöl in den Elektromotor 3 gelangt. Alle Wellen sind parallel zum Rotor des Elektromotors 3 ausgerichtet, so dass das Spritzöl des Differentials 2 und anderer Getriebebauteile zumindest auf der zugewandten Seite des Elektromotors 3 auf dessen Gehäuse 10 radial auftrifft.

Wie in den Fig. 7a, b, c, d und e dargestellt, kann das Getriebegehäuse 1 geometrische Strukturen aufweisen, die dazu ausgebildet sind, auf das Getriebegehäuse 1 gelangendes Öl auf den Elektromotor 3 zu leiten, insbesondere um das Öl gezielt in die Aussparungen 11 zu den Wicklungsköpfen zu leiten. Hierzu sind am Getriebegehäuse 1 Rippen 15, beispielsweise Prallbleche, ausgebildet, die eine oder mehrere Vertiefungen in Einbaulage oberhalb der Aussparungen 11 aufweisen können, so dass das Öl entlang der Rippe 15 bzw. des Blechs zur Aussparung 11 rinnt. Schematisch sind herabfallende Öltropfen 18 dargestellt.

Wie in Fig. 7e dargestellt, können auch Befestigungsstrukturen 16 des Getriebegehäuses wie Flanschbereiche bzw. Verschraubungen als Ölleitbleche bzw. Rippen verwendet werden.

Wie in den Fig. 8 a und b dargestellt, kann auch das Elektromotorgehäuse 10 an seiner Außenseite geometrische Strukturen aufweisen, die dazu ausgebildet sind, auf das Elektromotorgehäuse 10 gelangendes Öl in die Aussparungen 11 zu leiten. Solche geometrische Strukturen können beispielsweise zu den Aussparungen 11 hin schräg verlaufende Rippen 12 sein und/oder um das Elektromotorgehäuse 10 umlaufende Nuten 13 mit in den Nuten 13 liegenden Bohrungen als Aussparungen 11 zum Durchrinnen des Öls.

Wie in Fig. 9 a und b und Fig. 10 a bis e gezeigt, können auch Ölleitbleche 14 am Elektromotorgehäuse 10, insbesondere an der dem Differential 2 abgewandten Seite des Elektromotors 3, verwendet werden, um das Öl in Aussparungen 11 zu leiten. Zusätzlich können am Ölleitblech 14 Ölleitblechbohrungen 19 vorgesehen sein, um das Öl auch an der Hinterseite des Ölleitblechs 14 auf den Elektromotor 3 herunterlaufen zu lassen.

### Bezugszeichenliste

1 Getriebegehäuse
2 Differential
3 Elektromotor
4 Tellerrad
5 Auffangvorrichtung
6 erster Sammelbereich
7 Mittelteil
8 erste Öffnung
9 zweite Öffnung
10 Elektromotorgehäuse
11 Aussparungen
12 Rippe
13 Nut
14 Ölleitblech
15 Rippe
16 Befestigungsstruktur
17 Auslass
18 Öltropfen
19 Ölleitblechbohrungen

## Patentansprüche

1. Hybridgetriebe für ein Kraftfahrzeug, umfassend ein Getriebegehäuse (1), ein im Getriebegehäuse (1) angeordnetes Differential (2) und einen im Getriebegehäuse (1) angeordneten Elektromotor (3), wobei im Getriebegehäuse (1) Öl zur Schmierung und/oder zur Kühlung von Getriebekomponenten zirkuliert, wobei das Öl in einem Ölsumpf gesammelt wird,
wobei ein Tellerrad (4) des Differentials (2) teilweise im Ölsumpf angeordnet ist, wobei eine Auffangvorrichtung (5) so ausgebildet und im Getriebegehäuse (1) angeordnet ist, dass vom Tellerrad (4) aus dem Ölsumpf mitgeschleudertes Öl in der Auffangvorrichtung (5) gesammelt wird und so zum Elektromotor (3) weitergeleitet wird, dass das Öl zum Elektromotor (3) fließt, so dass der Elektromotor (3) gekühlt wird, wobei die Auffangvorrichtung (5) einen ersten Sammelbereich (6) an einem dem Tellerrad (4) zugewandten ersten Ende der Auffangvorrichtung (5) aufweist und einen zweiten Sammelbereich, an dem, dem ersten Ende gegenüberliegenden und dem Elektromotor (3) zugewandten zweiten Ende der Auffangvorrichtung (5), wobei das Öl von diesem zweiten Sammelbereich aus zum Elektromotor fallen kann, insbesondere in einen Hohlwellenrotor oder in einen Vorraum eines Hohlwellenrotors des Elektromotors fallen kann, wobei die Auffangvorrichtung (5) einen Mittelteil (7) zwischen dem ersten Sammelbereich (6) und dem zweiten Sammelbereich umfasst, der als Rohr oder als Schlauch ausgeführt ist, wobei die Auffangvorrichtung (5) zumindest eine erste Öffnung (8) zum Aufnehmen von Öl aus dem Bereich des Tellerrades (4) aufweist, **dadurch gekennzeichnet, dass** die Auffangvorrichtung (5) eine zweite Öffnung (9) zum Aufnehmen von Öl aus dem Bereich einer Kupplung des Hybridgetriebes aufweist.

2. Hybridgetriebe nach Anspruch 1,
**dadurch gekennzeichnet, dass** die Auffangvorrichtung (5) so ausgebildet und im Getriebegehäuse (1) angeordnet ist, dass in Einbaulage in einem Kraftfahrzeug der zweite Sammelbereich nicht höher liegt als der erste Sammelbereich (6), so dass sich im zweiten Sammelbereich im Normalbetrieb der selbe Ölpegelstand einstellen kann, wie im ersten Sammelbereich (6).

3. Hybridgetriebe nach zumindest einem der vorhergehenden Ansprüche,
**dadurch gekennzeichnet, dass** der Elektromotor (3) ein Elektromotorgehäuse (10) umfasst, wobei im Elektromotorgehäuse (10) im Bereich von Wickelköpfen des Elektromotors Aussparungen (11) ausgebildet sind, so dass Öl von außerhalb des Elektromotorgehäuses (10) durch die Aussparungen (11) an die Wickelköpfe des Elektromotors (3) gelangen kann, um diese zu kühlen.

4. Hybridgetriebe nach Anspruch 3,
**dadurch gekennzeichnet, dass** das Elektromotorgehäuse (10) an seiner Außenseite geometrische Strukturen aufweist, die dazu ausgebildet sind, auf das Elektromotorgehäuse (10) gelangendes Öl in die Aussparungen (11) zu leiten, insbesondere Rippen (12) und/oder Nuten (13) und/oder Ölleitbleche (14).

5. Hybridgetriebe nach zumindest einem der vorhergehenden Ansprüche,
**dadurch gekennzeichnet, dass** das Getriebegehäuse (1) geometrische Strukturen aufweist, die dazu ausgebildet sind, auf das Getriebegehäuse (1) gelangendes Öl auf den Elektromotor (3), insbesondere in die Aussparungen (11), zu leiten, insbesondere Rippen (15) und/oder Befestigungsstrukturen (16) des Getriebegehäuses.

## Claims

1. Hybrid transmission for a motor vehicle, comprising a transmission housing (1), a differential (2) which is arranged in the transmission housing (1), and an electric motor (3) which is arranged in the transmission housing (1), oil circulating in the transmission housing (1) for the lubrication and/or for the cooling of transmission components, the oil being collected in an oil sump,
a ring gear (4) of the differential (2) being arranged partially in the oil sump, a collecting apparatus (5) being configured and arranged in the transmission housing (1) in such a way that oil which is also flung out of the oil sump by the ring gear (4) is collected in the collecting apparatus (5) and is forwarded to the electric motor (3) in such a way that oil flows to the electric motor (3), with the result that the electric motor (3) is cooled, the collecting apparatus (5) having a first collecting region (6) at a first end of the collecting apparatus (5), which first end faces the ring gear (4), and a second collecting region at that second end of the collecting apparatus (5) which lies opposite the first end and faces the electric motor (3), it being possible for the oil to fall out of the said second collecting region to the electric motor, it being possible, in particular, for it to fall into a hollow shaft rotor or into a prechamber of a hollow shaft rotor of the electric motor, the collecting apparatus (5) comprising a central part (7) between the first collecting region (6) and the second collecting region, which central part (7) is configured as a pipe or as a hose, the collecting apparatus (5) having at least one first opening (8) for receiving oil from the region of the ring gear (4), **characterized in that** the collecting apparatus (5) has a second opening (9) for receiving oil from the region of a clutch of the hybrid transmission.

2. Hybrid transmission according to Claim 1, **characterized in that** the collecting apparatus (5) is configured and is arranged in the transmission housing (1) in such a way that, in the installed position in a motor vehicle, the second collecting region does not lie at a higher level than the first collecting region (6), with the result that the same oil level can be set in the second collecting region in normal operation as in the first collecting region (6).

3. Hybrid transmission according to at least one of the preceding claims, **characterized in that** the electric motor (3) comprises an electric motor housing (10), cut-outs (11) being configured in the electric motor housing (10) in the region of winding heads of the electric motor, with the result that oil can pass from outside the electric motor housing (10) through the cut-outs (11) onto the winding heads of the electric motor (3), in order to cool them.

4. Hybrid transmission according to Claim 3, **characterized in that**, on its outer side, the electric motor housing (10) has geometric structures, in particular ribs (12) and/or grooves (13) and/or oil conducting plates (14), which are configured to conduct oil which passes onto the electric motor housing (10) into the cut-outs (11).

5. Hybrid transmission according to at least one of the preceding claims, **characterized in that** the transmission housing (1) has geometric structures, in particular ribs (15) and/or fastening structures (16) of the transmission housing, which are configured to conduct oil which passes onto the transmission housing (1) onto the electric motor (3), in particular into the cut-outs (11).

## Revendications

1. Transmission hybride pour un véhicule automobile, comprenant un carter de transmission (1), un différentiel (2) agencé dans le carter de transmission (1) et un moteur électrique (3) agencé dans le carter de transmission (1), de l'huile pour la lubrification et/ou pour le refroidissement de composants de transmission circulant dans le carter de transmission (1), l'huile étant recueillie dans un réservoir d'huile,
une couronne (4) du différentiel (2) étant agencée partiellement dans le réservoir d'huile, un dispositif de collecte (5) étant configuré et agencé dans le carter de transmission (1) de telle sorte que de l'huile expulsée du réservoir d'huile par la couronne (4) soit recueillie dans le dispositif de collecte (5) et acheminée jusqu'au moteur électrique (3) de telle sorte que l'huile s'écoule jusqu'au moteur électrique (3), de telle sorte que le moteur électrique (3) soit refroidi, le dispositif de collecte (5) comprenant une première zone de collecte (6) au niveau d'une première extrémité du dispositif de collecte (5) tournée vers la couronne (4) et une deuxième zone de collecte, au niveau de la deuxième extrémité du dispositif de collecte (5), opposée à la première extrémité et tournée vers le moteur électrique (3), l'huile pouvant tomber depuis cette deuxième zone de collecte jusqu'au moteur électrique, en particulier pouvant tomber dans un rotor à arbre creux ou dans un espace préliminaire d'un rotor à arbre creux du moteur électrique, le dispositif de collecte (5) comportant une partie centrale (7) entre la première zone de collecte (6) et la deuxième zone de collecte, qui est réalisée sous la forme d'un tube ou sous la forme d'un tuyau, le dispositif de collecte (5) comprenant au moins une première ouverture (8) pour la réception d'huile à partir de la zone de la couronne (4), **caractérisée en ce que** le dispositif de collecte (5) comprend une deuxième ouverture (9) pour la réception d'huile à partir de la zone d'un embrayage de la transmission hybride.

2. Transmission hybride selon la revendication 1, **caractérisée en ce que** le dispositif de collecte (5) est configuré et agencé dans le carter de transmission (1) de telle sorte que, dans une position de montage dans un véhicule automobile, la deuxième zone de collecte ne soit pas située plus haut que la première zone de collecte (6), de telle sorte que le même niveau d'huile puisse d'ajuster dans la deuxième zone de collecte en fonctionnement normal que dans la première zone de collecte (6).

3. Transmission hybride selon au moins l'une quelconque des revendications précédentes, **caractérisée en ce que** le moteur électrique (3) comporte un carter de moteur électrique (10), des évidements (11) étant formés dans le carter de moteur électrique (10) dans la zone de têtes d'enroulement du moteur électrique, de telle sorte que de l'huile puisse atteindre les têtes d'enroulement du moteur électrique (3) depuis l'extérieur du carter de moteur électrique (10) à travers les évidements (11), afin de refroidir celles-ci.

4. Transmission hybride selon la revendication 3, **caractérisée en ce que** le carter de moteur électrique (10) comprend sur son côté extérieur des structures géométriques, qui sont configurées pour conduire de l'huile ayant atteint le carter de moteur électrique (10) dans les évidements (11), en particulier des nervures (12) et/ou des rainures (13) et/ou des plaques de guidage d'huile (14).

5. Transmission hybride selon au moins l'une quelconque des revendications précédentes, **caractérisée en ce que** le carter de transmission (1) comprend des structures géométriques qui sont configurées pour conduire de l'huile ayant atteint le carter de transmission (1) vers le moteur électrique (3), en particulier dans les évidements (11), en particulier des nervures (15) et/ou des structures de fixation (16) du carter de transmission.
